# EUROPEAN PATENT SPECIFICATION

(11) **EP 1 243 679 B1**
(45) Date of publication and mention of the grant of the patent: **27.12.2006**
(21) Application number: 02006417.6
(22) Date of filing: 21.03.2002
(51) Int. Cl.: D01F 9/127, C08K 7/06

(54) **Carbon fiber and composite using the same**
Kohlenstofffasern und Verbundwerkstoffe unter Verwendung derselben
Fibres de carbone et matériau composite les utilisant

(30) Priority: 21.03.2001 JP 2001081734; 29.08.2001 JP 2001260403
(43) Date of publication of application: 25.09.2002
(73) Proprietor: Nano Graphite Materials, Inc., Cedarville, Ohio (US); Endo, Morinobu, Suzaka-shi, Nagano-ken (JP)
(72) Inventor: Yanagisawa, Takashi, Nano Graphite Materials, Inc., Cedarville, Ohio (US); Endo, Morinobu, Suzaka-shi, Nagano-ken (JP); Lake, Max Laverne, Nano Graphite Materials, Inc., Cedarville, Ohio (US)
(74) Representative: Heim, Hans-Karl

(56) References cited:
- EP-A- 0 198 558
- EP-A- 1 122 344
- WO-A-91/01621
- ENDO M ET AL: "Structural characterization of cup-stacked nanofibers with an entirely hollow core" APPLIED PHYSICS LETTERS, vol. 80, no. 7, 18 February 2002 (2002-02-18), pages 1267-1269, XP002230243
- TERRONES H ET AL: "Graphitic cones in palladium catalysed carbon nanofibres" CHEMICAL PHYSICS LETTERS, vol. 343, 3 August 2001 (2001-08-03), pages 241-250, XP002230244
- ENDO M ET AL: "Pyrolytic carbon nanotubes from vapor-grown carbon fibers" CARBON, ELSEVIER SCIENCE PUBLISHING, NEW YORK, NY, US, vol. 33, no. 7, 1995, pages 873-881, XP004022501 ISSN: 0008-6223

## Description

The present invention relates to a carbon fiber and a composite using the same. More particularly, the present invention relates to a carbon fiber having a herring-bone structure in which a number of hexagonal carbon layers in the shape of a bottomless cup are stacked, wherein at least part of edges of the hexagonal carbon layers is exposed, and to a composite containing the carbon fiber.

EP-A- 1 122 344 discloses a graphite nanofiber having a herring-bone structure with planar graphene sheets.

A vapor-grown carbon fiber is known in the art.

This carbon fiber is a short fiber in which carbon obtained by pyrolysis of hydrocarbons such as benzene or methane at a temperature of about 700 °C to 1000 °C is grown with a catalyst particle such as a ultra-fine iron particle or nickel as a nucleus.

Carbon fibers generally have a structure in which the hexagonal carbon layers are grown concentrically or a structure in which the hexagonal carbon layers are grown in the axial direction. However, depending upon the vapor growth conditions such as catalyst, temperature range, and flow rate, carbon fibers may have a herring-bone structure in which the stacked hexagonal carbon layers are tilted with respect to the fiber axis at an specific angle.

Carbon fibers are often mixed with resins or the like and used as composites. However, carbon fibers generally have poor adhesion to resins.

This is because carbon fibers have a lower degree of surface activity since the hexagonal carbon layers (AB planes) are exposed on the inner and outer surfaces. Moreover, a thin deposited layer in which an excess amount of insufficiently crystallized amorphous carbon is deposited is inevitably formed on the surface of carbon fibers manufactured using a vapor growth process. This deposited layer also has a lower degree of activity, thereby resulting in poor adhesion to the resins.

The above-described problems are solved according to the present invention by a carbon fiber of the main claim. Preferred embodiments are cited in the dependent claims. The present invention may provide a carbon fiber having a high degree of surface activity and exhibiting good adhesion to resins or the like, and a composite using the same.

In order to solve the above problems, a first aspect of the present invention provides a carbon fiber comprising a coaxial stacking morphology of truncated conical tubular graphene layers or a truncated graphene conical tubule's morphology, wherein each of the truncated conical tubular graphene layers includes a hexagonal carbon layer.

In other words, this carbon fiber has a cup-stacked structure or a lampshade-stacked structure in which a number of hexagonal carbon layers in the shape of a bottomless cup are stacked. The coaxial stacking morphology of the truncated conical tubular graphene layers may have a shape of a hollow core with no bridge. According to such a structure, each of the truncated conical tubular graphene layers has a large ring end at one end and a small ring end at the other end in an axial direction, wherein edges of the hexagonal carbon layers are exposed at the large ring ends of the outer surface and the small ring ends of the inner surface. In other words, the edges of the tilted hexagonal carbon layers having a herring-bone structure are exposed in layers.

In an ordinary carbon fiber with a herring-bone structure, a number of hexagonal carbon layers in the shape of a cup having a bottom are stacked. However, the carbon fiber according to the first aspect of the present invention has a hollow structure with no bridge and has a length ranging from several tens of nanometers to several tens of microns.

If the coaxial stacking morphology of the truncated conical tubular graphene layers is vapor grown, a wide area of an outer surface or an inner surface may be covered with a deposited film of an excess amount of pyrolytic carbons. However, at least part of edges of the hexagonal carbon layers may be exposed at the large ring ends on the outer surface side or at the small ring ends on the inner surface side.

The edges of the hexagonal carbon layers exposed on the outer surface or the inner surface of the carbon fiber have an extremely high degree of activity, exhibit good affinity to various types of materials, and excel in adhesion to base materials such as resins. Therefore, a composite excelling in tensile strength and compressive strength can be obtained.

In this carbon fiber, part or all of the deposited films formed over the outer surface or the inner surface during the vapor growth process of the carbon fiber may be removed by a treatment to be performed later. It is because the deposited layers are formed of an excess amount of insufficiently crystallized amorphous carbon, and the surfaces of the deposited layers are inactive.

In the carbon fiber according to the first aspect of the present invention, an outer surface of the carbon fiber may be formed of the large ring ends stacked in the axial direction; and exposed part of the edges of the hexagonal carbon layers may have an area equal to or more than 2% of an area of the outer surface, and preferably 7% of an area of the outer surface.

The positions of the large ring ends forming the outer surface may be irregular, and the outer surface may have minute irregularity at the level of atoms.

Similarly, an inner surface of the carbon fiber may be formed of the small ring ends stacked in the axial direction; and positions of the small ring ends forming the inner surface may be irregular, and the inner surface may have minute irregularity at the level of atoms.

Such configuration including a hollow shape provides the anchor effect on the base materials such as resin, and so adhesion to the base materials is further increased. As a result, a composite having an extremely high strength can be provided.

The carbon fiber according to the first aspect of the present invention may have characteristics by which at least the area in which the edges of the hexagonal carbon layers are exposed (or area in which the deposited layers are removed) is not graphitized even if the carbon fiber is subjected to a heat treatment at a temperature of 2500 °C or more.

Carbon fibers are generally graphitized by a heat treatment at a temperature of 2500 °C or more.

However, the carbon fiber in which the edges of the hexagonal carbon layers are exposed is not graphitized even if the carbon fiber is heated at 2500 °C or more at least in the area in which the edges of the hexagonal carbon layers are exposed.

It is confirmed that the carbon fiber is not graphitized by a heat treatment at a temperature of 2500 °C or more by the fact that the D peak (1360 cm⁻¹) in the Raman spectrum does not disappear.

A third aspect of the present invention provides a composite including a base material such as resin or metal with which the above carbon fiber is mixed in.

### BRIEF DESCRIPTION OF THE SEVERAL VIEWS OF THE DRAWING

FIG. 1 is a copy of a transmission electron micrograph showing a carbon fiber having a herring-bone structure manufactured using a vapor growth process.
FIG. 2 is a copy of an enlarged micrograph of FIG. 1.
FIG. 3 is a schematic view of FIG. 2.
FIG. 4 is a copy of a transmission electron micrograph showing a carbon fiber having a herring-bone structure heated at a temperature of about 530 °C for one hour in air.
FIG. 5 is a copy of an enlarged micrograph of FIG. 4.
FIG. 6 is a copy of a further enlarged micrograph of FIG. 5.
FIG. 7 is a schematic view of FIG. 6.
FIG. 8 is a characteristic chart showing tensile strength (horizontal axis) and tensile modulus (vertical axis) of various types of composites.
FIG. 9 is a characteristic chart showing the Raman spectra of a carbon fiber having a herring-bone structure (sample No. 24PS) after heating at 500 °C, 520 °C, 530 °C, and 540 °C for one hour in air.
FIG. 10 is a characteristic chart showing the Raman spectra of carbon fiber samples No. 19PS and No. 24PS in which edges of hexagonal carbon layers are exposed by the heat treatment.
FIG. 11 is a characteristic chart showing the Raman spectra of the carbon fiber samples No. 19PS and No. 24PS heated at 3000 °C after the edges of the hexagonal carbon layers have been exposed.
FIG. 12 is a computer graphic showing a coaxial stacking morphology of truncated conical tubular graphene layers, based on rigorous quantum theoretical calculations.
FIG. 13 is a computer graphic showing a hexagonal carbon layer, which is a unit of the coaxial stacking morphology of the truncated conical tubular graphene layers of FIG. 12, based on rigorous quantum theoretical calculations.
FIG. 14 is a schematic view of a large ring end and a small ring end respectively forming an outer surface and an inner surface of the coaxial stacking morphology of truncated conical tubular graphene layers.
FIG. 15 is a schematic view of a deposited film of pyrolytic carbon formed over a wide range of an outer surface of a carbon fiber.

### DETAILED DESCRIPTION OF THE EMBODIMENT

One embodiment of the present invention is described below in detail with reference to the drawings.

Carbon fibers generally have a structure in which the hexagonal carbon layers are grown concentrically or a structure in which the hexagonal carbon layers are grown in the axial direction. However, depending upon the vapor growth conditions such as catalyst, temperature range, and flow rate, carbon fibers may have a herring-bone structure in which the stacked hexagonal carbon layers are tilted with respect to the fiber axis at an specific angle.

In an ordinary carbon fibers with a herring-bone structure, a number of hexagonal carbon layers in the shape of a cup having a bottom are stacked. However, the vapor-grown carbon fiber according to one embodiment of the present invention has a structure in which a number of hexagonal carbon layers in the shape of a bottomless cup are stacked (this bottomless carbon fiber is hereinafter called "carbon fiber having a herring-bone structure").

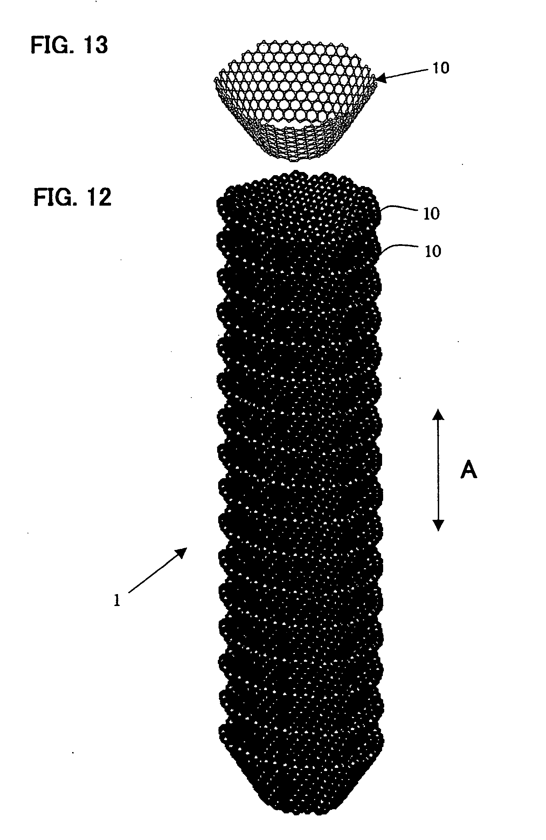

Specifically, this carbon fiber 1 has a coaxial stacking morphology of truncated conical tubular graphene layers shown by a computer graphic in FIG. 12. Each of the truncated conical tubular graphene layers is formed of a hexagonal carbon layer 10 as shown in FIG. 13. Although the actual hexagonal carbon layers are stacked densely in an axial direction A, they are stacked roughly in FIG. 12 for convenience of description.

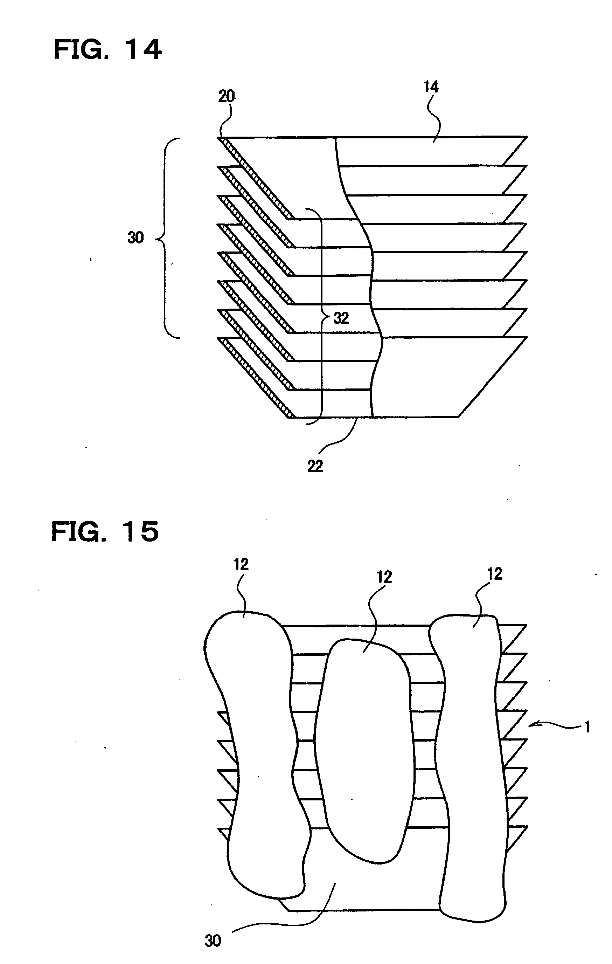

FIG. 14 is a schematic view of FIG. 12. Each of the hexagonal carbon layers 10 has a large ring end 20 and a small ring end 22 at opposite ends in the axial direction. The large ring ends 20 are stacked in the axial direction A to form an outer surface 30 of the carbon fiber 1. The small ring ends 22 are stacked in the axial direction A to form an inner surface 32 of the carbon fiber 1. The carbon fiber 1 is thus in the shape of a hollow core with no bridge and has a center hole 14.

An example of a method of manufacturing the carbon fiber 1 shown in FIG. 12 is described below.

A conventional vertical type reactor was used.

Benzene as a raw material was fed to a chamber of the reactor using a hydrogen stream at a flow rate of 0.3 l/h and a partial pressure equivalent to the vapor pressure at about 20 °C. Ferrocene as a catalyst was vaporized at 185 °C and fed to the chamber at a concentration of about 3 × 10⁻⁷ mol/s. The reaction temperature and the reaction time were about 1100 °C and about 20 minutes, respectively. As a result, a carbon fiber having a herring-bone structure with an average diameter of about 100 nm was obtained. A hollow carbon fiber having no bridge at a length ranging from several tens of nanometers to several tens of microns, in which a number of hexagonal carbon layers in the shape of a bottomless cup are stacked, is obtained by adjusting the flow rate of the raw material and the reaction temperature (which are changed depending on the size of the reactor).

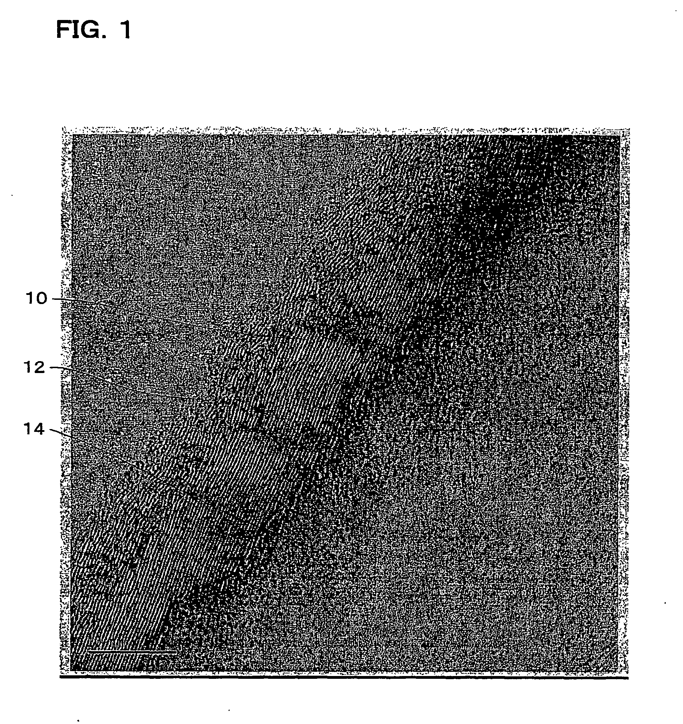

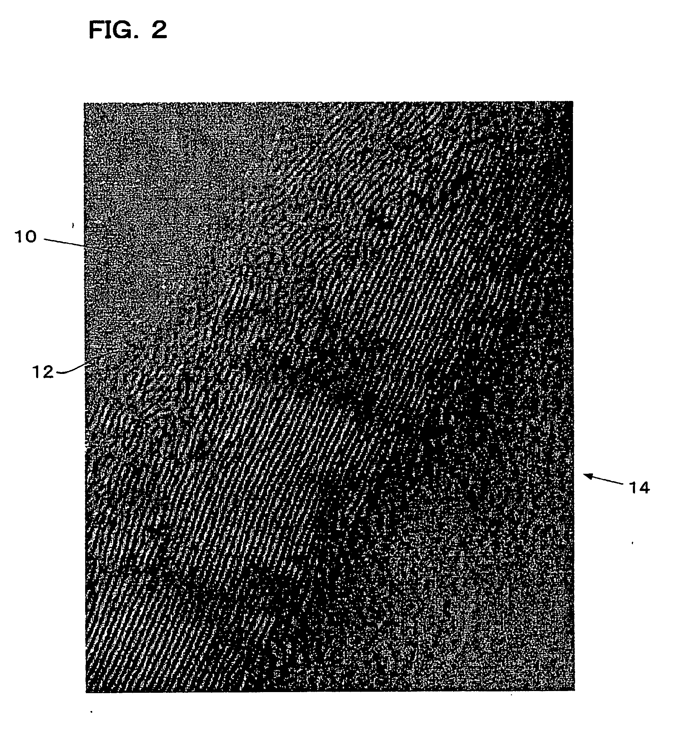

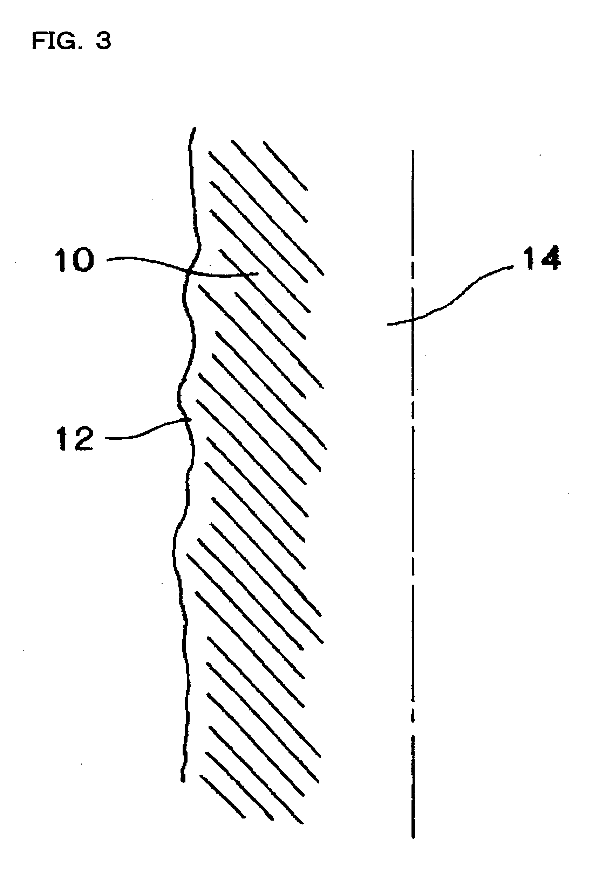

FIG. 1 is a view showing a copy of a transmission electron micrograph of the carbon fiber having a herring-bone structure manufactured using the vapor growth process. FIG. 2 is a view showing a copy of an enlarged photograph of FIG. 1, and FIG. 3 is a schematic view of FIG. 2.

As is clear from these figures, a deposited layer 12, in which an excess amount of amorphous carbon is deposited, is formed to cover the tilted hexagonal carbon layers 10. The thickness of the deposited layer 12 is about several nanometers. A reference numeral 14 indicates the center hole.

FIG. 15 is a view schematically showing a state in which the deposited films 12 are formed over a wide area of the outer surface 30 of the carbon fiber 1. As shown in FIG. 15, the hexagonal carbon layers 10 are exposed on the large ring ends 20 in the areas in which the outer surface of the carbon fiber 1 is not covered with the deposited films 12. These areas have a high degree of activity. In the area in which the inner surface of the carbon fiber 1 is not covered with the deposited films 12, the hexagonal carbon layers 10 are exposed on the exposed small ring ends 22.

The deposited layers 12 are oxidized and pyrolyzed by heating the carbon fiber on which the deposited layers 12 are formed at a temperature of 400 °C or more, preferably 500 °C or more, and still more preferably 520 to 530 °C for one to several hours in air. As a result, the deposited layers 12 are removed, whereby the edges of the hexagonal carbon layers are further exposed.

The deposited layers 12 may be removed by washing the carbon fiber with supercritical water, whereby the edges of the hexagonal carbon layers are exposed.

The deposited layers 12 may be removed by immersing the carbon fiber in hydrochloric acid or sulfuric acid and heating the carbon fiber at about 80 °C while stirring using a stirrer.

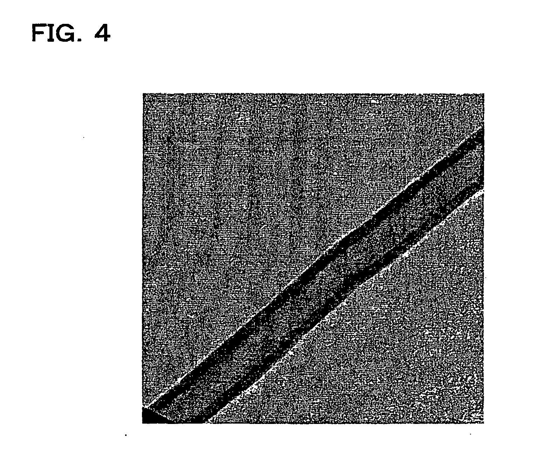

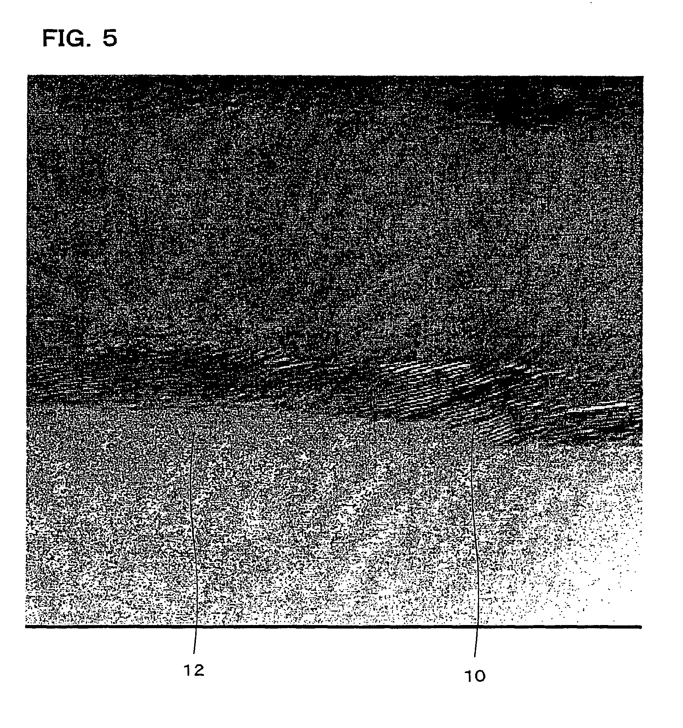

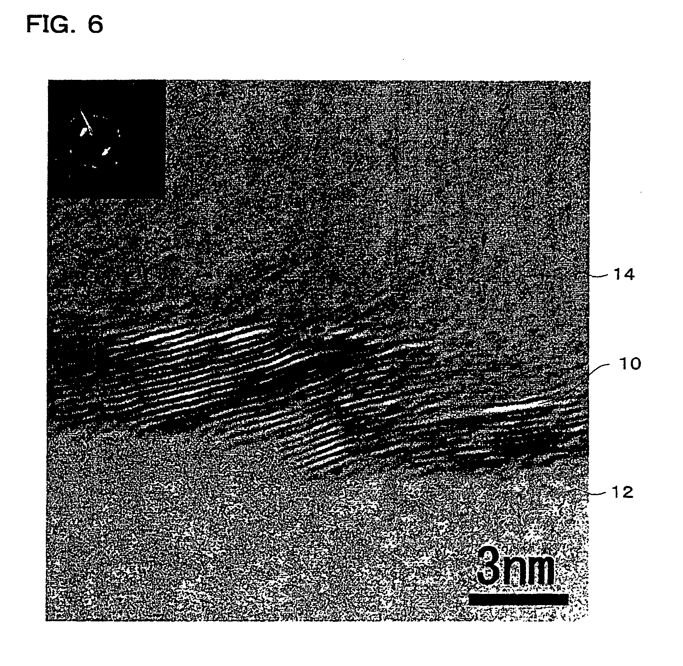

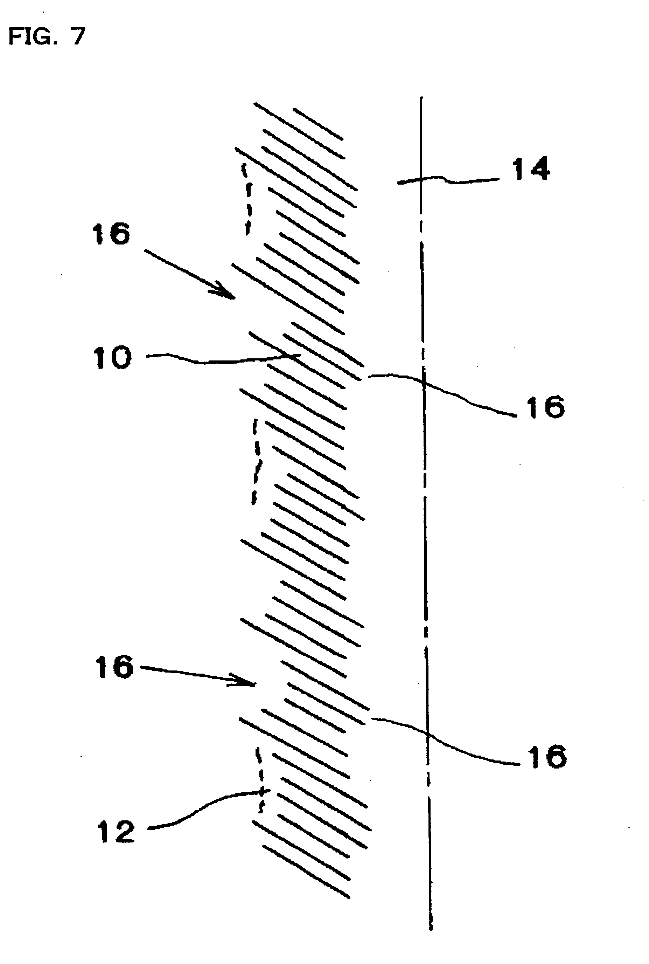

FIG. 4 is a copy of a transmission electron micrograph of the carbon fiber having a herring-bone structure heated at a temperature of about 530 °C for one hour in air. FIG. 5 is a copy of an enlarged photograph of FIG. 4, FIG. 6 is a copy of an enlarged photograph of FIG. 5, and FIG. 7 is a schematic view of FIG. 6.

As is clear from FIGS. 5 to 7, part of the deposited layers 12 is removed by performing a heat treatment or the like, whereby the edges of the hexagonal carbon layers 10 are further exposed. The residual deposited layers 12 are considered to be almost pyrolyzed and merely attached to the carbon fiber. The deposited layers 12 can be removed completely by combining heat treatment for several hours and washing with supercritical water.

As is clear from FIG. 4, the carbon fiber 1 in which a number of hexagonal carbon layers 10 in the shape of a bottomless cup are stacked is hollow at a length ranging at least from several tens of nanometers to several tens of microns.

The tilt angle of the hexagonal carbon layers with respect to the center line is from about 25° to 35°.

As is clear from FIGS. 6 and 7, the edges of the hexagonal carbon layers 10 on the outer surface and the inner surface are irregular in the area in which the edges of the hexagonal carbon layers 10 are exposed, whereby minute irregularities 16 at a nanometer (nm) level, specifically, at the level of atoms are formed. The irregularities 16 are unclear before removing the deposited layers 12 as shown in FIG. 2. However, the irregularities 16 appear by removing the deposited layers 12 by the heat treatment.

The exposed edges of the hexagonal carbon layers 10 have an extremely high degree of activity and easily bond to other atoms. The reasons therefor are considered to be as follows. The heat treatment in air causes the deposited layers 12 to be removed and the amount of functional groups containing oxygen such as a phenolic hydroxyl group, carboxyl group, quinone type carbonyl group, and lactone group, to be increased on the exposed edges of the hexagonal carbon layers 10. These functional groups containing oxygen have high hydrophilicity and high affinity to various types of substances.

In addition, the hollow structure and the irregularities 16 contribute to the anchor effect to a large extent.

In the case where composites are manufactured by mixing the carbon fiber with resin materials such as polyethylene, polypropylene, nylon, fluororesins such as FEP, PFA, and PTFE, polyesters, polyimides, and polycarbonates, the strength of these composites is improved remarkably.

The carbon fiber may be mixed not only with the resin materials but also with metal materials such as aluminum, copper, and magnesium with good adhesion.

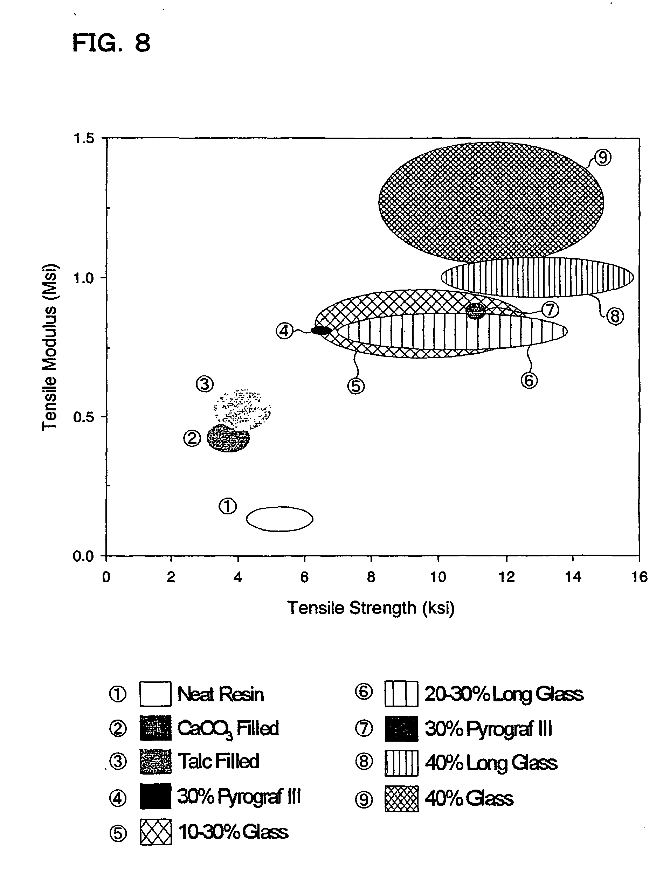

FIG. 8 shows tensile strength (horizontal axis) and tensile modulus (vertical axis) of composites in which reinforcing fibers or various types of fillers are mixed with polypropylene (base material). The case of mixing 30 wt% of an untreated herring-bone carbon fiber is denoted by ④, and the case of mixing 30 wt% of the above carbon fiber in which the deposited layers are removed by the heat treatment is denoted by ⑦.

As is clear from FIG. 8, composites containing the carbon fiber have strength comparable to composites in which a glass fiber is mixed. In the case of mixing the carbon fiber in which the edges of the hexagonal carbon layers are exposed by removing the deposited layers (⑦), the tensile strength is improved remarkably and the tensile modulus is improved moderately in comparison with the case of mixing the untreated herring-bone carbon fiber (④).

Generally, when the carbon fiber is mixed with a base material such as a resin material, the carbon fiber tends to break during mixing. Therefore, a large amount (10 wt% or more) of carbon fiber is mixed in order to improve the performance. However, since the carbon fiber of the present invention has good adhesion to base materials such as resins, it suffices that the amount of carbon fiber be in the range from 0.1 wt% or more to 10 wt% or less (preferably about 0. 3 wt%) in terms of strength.

Moreover, the carbon fiber having a herring-bone structure is deformed in the shape of the letter "S", the letter "Z", or a spiral due to external force applied during mixing and fits the base material. Therefore, a good twining effect is expected. Specifically, the carbon fiber has characteristics by which the carbon fiber seldom breaks and is easily bent, soft, twisted, rotated, and the like. These characteristics are obtained even if the deposited layers 12 are not removed. However, these characteristics are caused to occur significantly by removing the deposited layers 12.

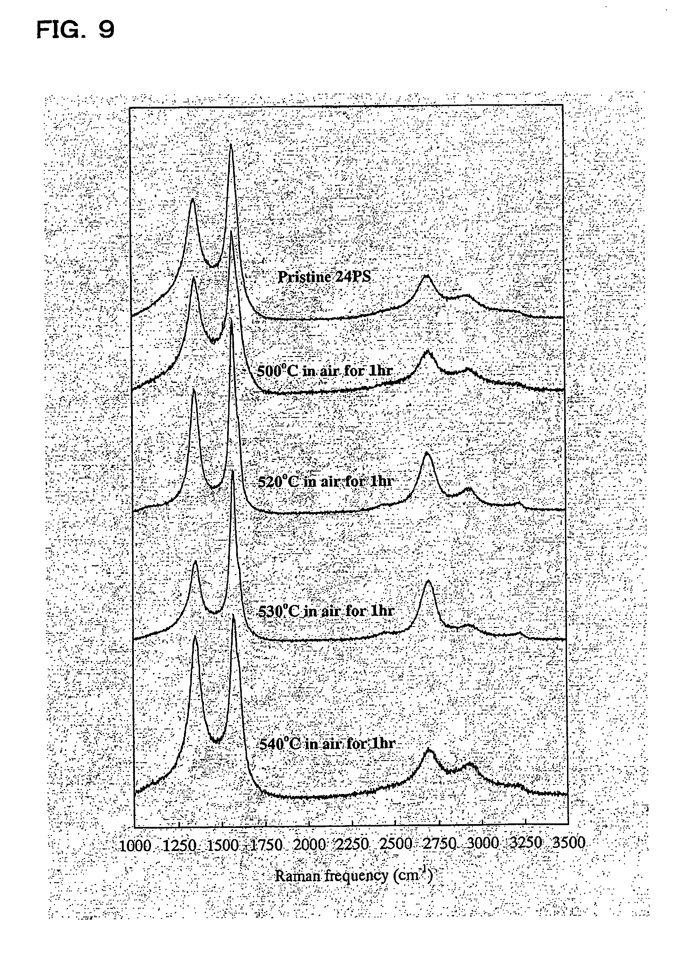

FIG. 9 shows the Raman spectra of a carbon fiber having a herring-bone structure (sample No. 24PS) after heating at 500 °C, 520 °C, 530 °C, and 540 °C for one hour in air.

FIGS. 5 to 7 show that the deposited layers 12 are removed by the heat treatment. As is clear from the spectra shown in FIG. 9, the presence of the D peak (1360 cm⁻¹) and the G peak (1580 cm⁻¹) shows that this sample is a carbon fiber and has no graphitized structure.

Specifically, the carbon fiber having a herring-bone structure is considered to have a turbostratic structure in which the carbon layers are disordered.

This carbon fiber has a turbostratic structure in which the hexagonal carbon layers are stacked in parallel but are shifted in the horizontal direction or rotated. Therefore, the carbon fiber has no crystallographic regularity.

The feature of this turbostratic structure is that intercalation of other atoms or the like seldom occurs. This is one of the advantages. Specifically, atoms or the like are easily supported on the exposed edges of the hexagonal carbon layers having a high degree of activity, since the substances are scarcely intercalated. Therefore, the carbon fiber is expected to function as an efficient support.

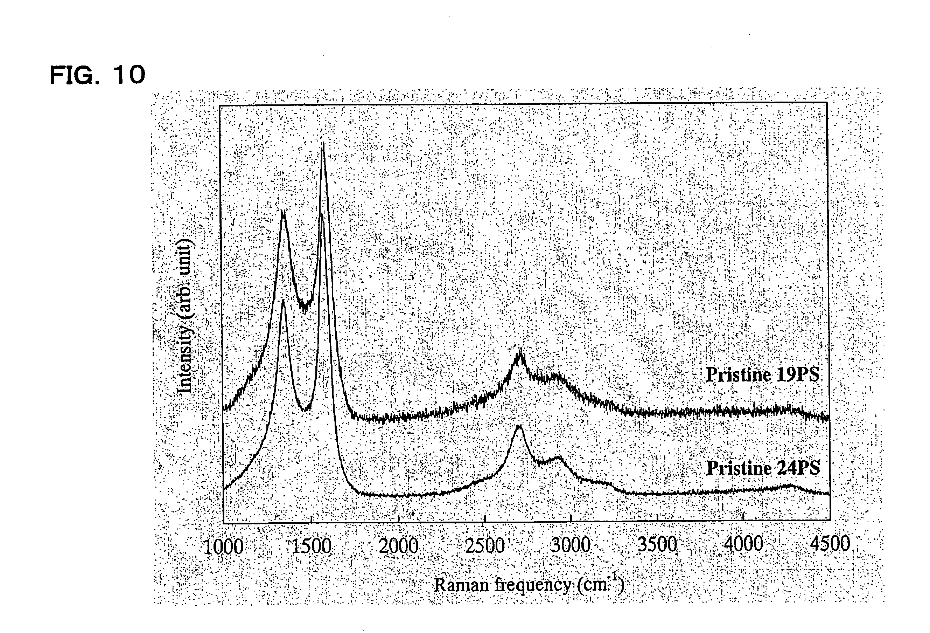

FIG. 10 shows the Raman spectra of carbon fiber samples No. 19PS and No. 24PS in which the edges of the hexagonal carbon layers are exposed by the above heat treatment.

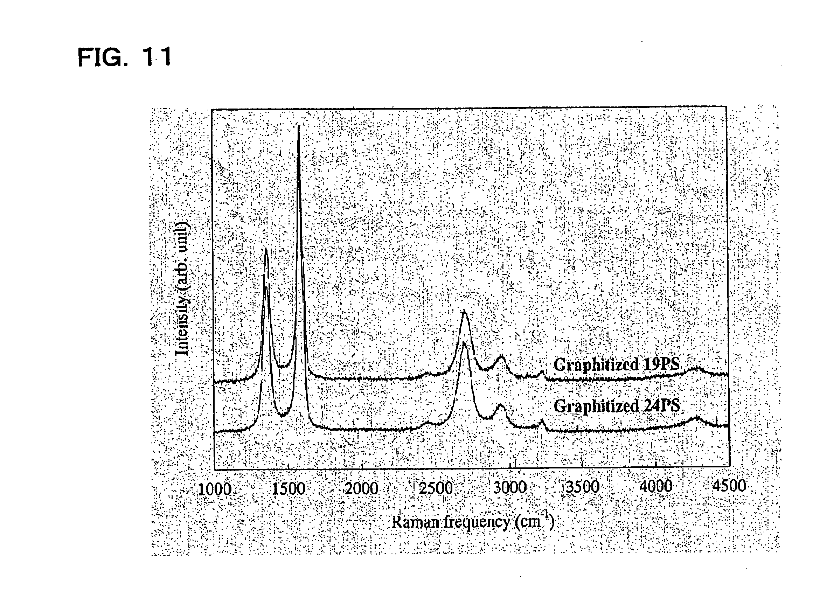

FIG. 11 shows the Raman spectra of the carbon fiber samples No. 19PS and No. 24PS heated at 3000 °C (common graphitization treatment) after the edges of the hexagonal carbon layers have been exposed.

As shown in FIG. 11, the D peak does not disappear even if the carbon fiber in which the edges of the hexagonal carbon layers are exposed is subjected to the graphitization treatment. This means that the carbon fiber is not graphitized by the graphitization treatment.

A diffraction line did not appear at the 112 plane in X-ray diffractometry (not shown). This also shows that the carbon fiber was not graphitized.

It is considered that the carbon fiber is not graphitized by the graphitization treatment because the deposited layers 12, which are easily graphitized, have been removed. This also shows that the remaining portions of the herring-bone structure are not graphitized.

The fact that the carbon fiber is not graphitized at a high temperature means that the carbon fiber is thermally stable.

Since the carbon fiber is not graphitized, the carbon fiber may be effectively used as an anode material or an additive to the anode material of a lithium ion battery.

Conventionally, graphite materials have been used as the anode material of the lithium ion battery. However, when lithium ions are doped between layers of the graphite materials, the anode material expands due to an increase in the space between the layers. If the charge and discharge cycles are repeated in such a state, the electrode may be deformed or lithium metal may be deposited, thereby causing capacitance degradation or internal short circuits. Moreover, if the space between layers is expanded and contracted repeatedly, the graphite crystal structure may be damaged, whereby the cycle characteristics may be adversely affected.

On the contrary, the carbon fiber which is scarcely graphitized has a larger space between the AB planes than the graphite material and shows neither expansion nor deformation between layers after doping with lithium ions, thereby exhibiting extremely excellent cycle characteristics. Moreover, the carbon fiber has an improved electrical energy density in comparison with the graphite material.

Note that the carbon fiber having a herring-bone structure in which the deposited layers 12 are not removed may be used effectively as the anode material or an additive to the anode material of certain types of lithium ion batteries.

Natural graphite and graphite, which are conventional anode materials, have the following problem. Specifically, since the edges having an extremely high oxidation potential are exposed, a reaction product (lithium cobalt oxide) of the lithium ion battery is deposited on the edges, whereby the characteristics of the battery easily deteriorate.

However, deposition of the reaction product can be prevented by using the carbon fiber on which the deposited layers 12 are formed thickly by controlling the reaction conditions as the anode material or additive to the anode material of the lithium ion battery. This prevents deterioration of the battery characteristics. Although not suitable in all types of lithium ion batteries, use of the carbon fiber having a herring-bone structure in which the deposited layers 12 are not removed but are formed thickly as the anode material or additive to the anode material is effective in certain types of lithium ion batteries.

In the carbon fiber manufactured by the vapor growth process according to one embodiment of the present invention, a number of hexagonal carbon layers in the shape of a bottomless cup are stacked, wherein the edges of the tilted hexagonal carbon layers of the herring-bone structure are exposed in layers. The exposed edges of the hexagonal carbon layers have an extremely high degree of activity and excel in adhesion to base materials such as resins. Therefore, the carbon fiber is suitable as a material for composites excelling in tensile strength and compressive strength.

The inner and outer surfaces of the carbon fiber, on which the deposited layers are removed and the edges of the hexagonal carbon layers are exposed in layers, have minute irregularities at the level of atoms because the edges of each layer are irregular. This contributes to the anchor effect for base materials such as resins, whereby adhesion to the base material is further increased. As a result, a composite having an extremely high strength can be provided.

The vapor-grown carbon fiber according to one embodiment of the present invention is not graphitized even if the carbon fiber is subjected to a heat treatment at a high temperature of 2500 °C or more. Therefore, the carbon fiber can be used as the anode material or additive to the anode material of the lithium ion battery.

The composite according to one embodiment of the present invention excels in strength as described above.

## Claims

1. A carbon fiber comprising a coaxial stacking morphology of truncated conical tubular graphene layers,
wherein the coaxial stacking morphology of the truncated conical tubular graphene layers has a shape of a hollow core with no bridge,
wherein each of the truncated conical tubular graphene layers includes a hexagonal carbon layer and has a large ring end at one end and a small ring end at the other end in an axial direction; and
wherein at least part of edges of the hexagonal carbon layers is exposed at the large ring ends.

2. The carbon fiber as defined in claim 1,
wherein at least part of edges of the hexagonal carbon layers is exposed at the small ring ends.

3. The carbon fiber as defined in claim 2,
wherein the coaxial stacking morphology of the truncated conical tubular graphene layers is vapor grown; and
wherein at least part of a deposited film formed during the vapor growth is removed from the large and small ring ends.

4. The carbon fiber as defined in any one of claims 1 to 3,
wherein an outer surface of the carbon fiber is formed of the large ring ends stacked in the axial direction; and
wherein the exposed part of the edges of the hexagonal carbon layers has an area equal to or more than 2 percentages of an area of the outer surface.

5. The carbon fiber as defined in claim 4,
wherein positions of the large ring ends forming the outer surface are irregular, and the outer surface has minute irregularity at the level of atoms.

6. The carbon fiber as defined in claim 2,
wherein an inner surface of the carbon fiber is formed of the small ring ends stacked in the axial direction; and
wherein positions of the small ring ends forming the inner surface are irregular, and the inner surface has minute irregularity at the level of atoms.

7. The carbon fiber as defined in any one of claims 1 to 6,
wherein heat treatment at a temperature equal to or more than 2500 °C provides no graphitization of the carbon fiber.

8. The carbon fiber as defined in any one of claims 1 to 7,
wherein heat treatment at a temperature equal to or more than 2500 °C provides no disappearance of the D peak (1360 cm⁻¹) in the Raman spectrum.

9. A composite comprising a base material with which the carbon fiber as defined in any one of claims 1 to 8 is mixed in.

10. The composite as defined in claim 9, wherein the base material is resin.

11. The composite as defined in claim 9, wherein the base material is metal.

12. The composite as defined in any one of claims 1 to 11,
wherein at least part of edges of the hexagonal carbon layers is exposed at the small ring ends.

13. The composite as defined in claim 12,
wherein the coaxial stacking morphology of the truncated conical tubular graphene layers is vapor grown; and
wherein at least part of the large and small ring ends is covered by a deposited film formed during the vapor growth.

14. The composite as defined in any one of claims 1 to 13,
wherein the coaxial stacking morphology of the truncated conical tubular graphene layers has a shape of a hollow core with no bridge.

15. The composite as defined in any one of claims 1 to 14,
wherein an outer surface of the carbon fiber is formed of the large ring ends stacked in the axial direction; and
wherein the exposed part of the edges of the hexagonal carbon layers has an area equal to or more then 2 percentages of an area of the outer surface.

16. The composite as defined in claim 15,
wherein positions of the large ring ends forming the outer surface are irregular, and the outer surface has minute irregularity at the level of atoms.

17. The composite as defined in claim 12,
wherein an inner surface of the carbon fiber is formed of the small ring ends stacked in the axial direction; and
wherein positions of the small ring ends forming the inner surface are irregular, and the inner surface has minute irregularity at the level of atoms.

## Patentansprüche

1. Kohlenstofffaser mit einer koaxialen Stapelungsmorphologie aus kegelstumpfförmigen röhrenartigen Graphitschichten,
wobei die koaxiale Stapelungsmorphologie aus kegelstumpfförmigen röhrenartigen Graphitschichten eine Form eines Hohlkerns ohne Verbrückung aufweist,
wobei jede der kegelstumpfförmigen röhrenartigen Graphitschichten eine hexagonale Kohlenstoffschicht enthält und ein großes Ringende an einem Ende und ein kleines Ringende an dem anderen Ende in einer axialen Richtung aufweist; und
wobei zumindest ein Teil der Kanten der hexagonalen Kohlenstoffschichten an den großen Ringenden exponiert ist.

2. Kohlenstofffaser nach Anspruch 1,
wobei zumindest ein Teil der Kanten der hexagonalen Kohlenstoffschichten an den kleinen Ringenden exponiert ist.

3. Kohlenstofffaser nach Anspruch 2,
wobei die koaxiale Stapelungsmorphologie der kegelstumpfförmigen röhrenartigen Graphitschichten gasphasenabgeschieden ist; und
wobei zumindest ein Teil eines während der Gasphasenabscheidung abgeschiedenen Films von den großen und kleinen Ringenden beseitigt ist.

4. Kohlenstofffaser nach einem der Ansprüche 1 bis 3,
wobei eine äußere Oberfläche der Kohlenstofffaser aus den in der axialen Richtung gestapelten großen Ringenden gebildet ist; und
wobei der exponierte Teil der Kanten der hexagonalen Kohlenstoffschichten eine Fläche von 2 Prozent oder mehr einer Fläche der äußeren Oberfläche aufweist.

5. Kohlenstofffaser nach Anspruch 4,
wobei Positionen der großen Ringenden, die die äußere Oberfläche bilden, unregelmäßig sind, und die äußere Oberfläche winzige Unregelmäßigkeiten von atomarer Größenordnung aufweist.

6. Kohlenstofffaser nach Anspruch 2,
wobei eine innere Oberfläche der Kohlenstofffaser aus den in der axialen Richtung gestapelten kleinen Ringenden gebildet ist; und
wobei Positionen der kleinen Ringenden, die die innere Oberfläche bilden, unregelmäßig sind, und die innere Oberfläche winzige Unregelmäßigkeiten von atomarer Größenordnung aufweist.

7. Kohlenstofffaser nach einem der Ansprüche 1 bis 6,
wobei eine Hitzebehandlung bei einer Temperatur von 2500°C oder mehr keine Graphitierung der Kohlenstofffaser liefert.

8. Kohlenstofffaser nach einem der Ansprüche 1 bis 7,
wobei eine Hitzebehandlung bei einer Temperatur von 2500°C oder mehr nicht zu einem Verschwinden des D-Peaksignals (1360 cm⁻¹) im Raman-Spektrum führt.

9. Verbundstoff mit einem Grundmaterial, in das die Kohlenstofffaser nach einem der Ansprüche 1 bis 8 eingemischt ist.

10. Verbundstoff nach Anspruch 9,
wobei das Grundmaterial ein Harz ist.

11. Verbundstoff nach Anspruch 9,
wobei das Grundmaterial ein Metall ist.

12. Verbundstoff nach einem der Ansprüche 1 bis 11,
wobei zumindest ein Teil der Kanten der hexagonalen Kohlenstoffschichten an den kleinen Ringenden exponiert ist.

13. Verbundstoff nach Anspruch 12,
wobei die koaxiale Stapelungsmorphologie der kegelstumpfförmigen röhrenartigen Graphitschichten gasphasenabgeschieden ist; und
wobei zumindest ein Teil der großen und kleinen Ringenden durch einen abgeschiedenen Film bedeckt ist, der während der Gasphasenabscheidung gebildet ist.

14. Verbundstoff nach einem der Ansprüche 1 bis 13,
wobei die koaxiale Stapelungsmorphologie der kegelstumpfförmigen röhrenartigen Graphitschichen eine Form eines Hohlkerns ohne Verbrückung aufweist.

15. Verbundstoff nach einem der Ansprüche 1 bis 14,
wobei eine äußere Oberfläche der Kohlenstofffaser aus den in der axialen Richtung gestapelten großen Ringenden gebildet ist; und
wobei der exponierte Tel der Kanten der hexagonalen Kohlenstoffschichten eine Fläche von 2 Prozent oder mehr einer Fläche der äußeren Oberfläche aufweist.

16. Verbundstoff nach Anspruch 15,
wobei Positionen der großen Ringenden, die die äußere Oberfläche bilden, unregelmäßig sind, und die äußere Oberfläche winzige Unregelmäßigkeiten von atomarer Größenordnung aufweist.

17. Verbundstoff nach Anspruch 12,
wobei eine innere Oberfläche der Kohlenstofffaser aus den in der axialen Richtung gestapelten kleinen Ringenden gebildet ist; und
wobei Positionen der kleinen Ringenden, die die innere Oberfläche bilden, unregelmäßig sind, und die innere Oberfläche winzige Unregelmäßigkeiten von atomarer Größenordnung aufweist.

## Revendications

1. Fibre de carbone comprenant une morphologie d'empilement coaxial de couches tubulaires tronconiques de graphène,
dans laquelle la morphologie d'empilement coaxial de couches tubulaires tronconiques de graphène a la forme d'un coeur (âme) creux sans pont,
dans laquelle chacune des couches tubulaires tronconiques de graphène comprend une couche hexagonale de carbone et possède une extrémité à large anneau à un bout et une extrémité à petit anneau à l'autre bout dans une direction axiale, et
dans laquelle une partie au moins des bords des couches hexagonales de carbone est exposée au niveau des extrémités à large anneau.

2. Fibre de carbone selon la revendication 1, dans laquelle une partie au moins des bords des couches hexagonales de carbone est exposée au niveau des extrémités à petit anneau.

3. Fibre de carbone selon la revendication 2,
dans laquelle la morphologie d'empilement coaxial des couches tubulaires tronconiques de graphène est obtenue par croissance en phase vapeur, et
dans laquelle au moins une partie d'un film déposé formé pendant la croissance en phase vapeur est éliminée des extrémités à grand et à petit anneau.

4. Fibre de carbone selon l'une quelconque des revendications 1 à 3,
dans laquelle une surface extérieure de la fibre de carbone est formée des extrémités à large anneau empilées dans la direction axiale, et
dans laquelle la partie exposée des bords des couches hexagonales de carbone a une aire égale ou supérieure à 2 pourcent d'une aire de la surface extérieure.

5. Fibre de carbone selon la revendication 4,
dans laquelle les positions des extrémités à large anneau formant la surface extérieure sont irrégulières, et la surface extérieure présente une minuscule irrégularité au niveau des atomes.

6. Fibre de carbone selon la revendication 2,
dans laquelle une surface intérieure de la fibre de carbone est formée des extrémités à petit anneau empilées dans la direction axiale, et
dans laquelle les positions des extrémités à petit anneau formant la surface intérieure sont irrégulières, et la surface intérieure présente une minuscule irrégularité au niveau des atomes.

7. Fibre de carbone selon l'une quelconque des revendications 1 à 6,
dans laquelle un traitement thermique à une température égale ou supérieure à 2500°C n'entraîne pas de graphitisation de la fibre de carbone.

8. Fibre de carbone selon l'une quelconque des revendications 1 à 7,
dans laquelle un traitement thermique à une température égale ou supérieure à 2500°C n'entraîne pas la disparition du pic D (1360 cm⁻¹) dans le spectre Raman.

9. Composite comprenant un matériau de base avec laquelle la fibre de carbone selon l'une quelconque des revendications 1 à 8 est mélangée.

10. Composite selon la revendication 9, dans lequel le matériau de base est de la résine.

11. Composite selon la revendication 9, dans lequel le matériau de base est du métal.

12. Composite selon l'une quelconque des revendications 1 à 11, dans lequel au moins une partie des bords des couches hexagonales de carbone est exposée au niveau des extrémités à petit anneau.

13. Composite selon la revendication 12,
dans laquelle la morphologie d'empilement coaxial des couches tubulaires tronconiques de graphène est obtenue par croissance en phase vapeur, et
dans laquelle au moins une partie des extrémités à grand et à petit anneau est recouverte d'un film déposé formé pendant la croissance en phase vapeur.

14. Composite selon l'une quelconque des revendications 1 à 13, dans lequel la morphologie d'empilement coaxial de couches tubulaires tronconiques de graphène a la forme d'un coeur (âme) creux sans pont.

15. Composite selon l'une quelconque des revendications 1 à 14,
dans lequel une surface extérieure de la fibre de carbone est formée des extrémités à large anneau empilées dans la direction axiale, et
dans lequel la partie exposée des bords des couches hexagonales de carbone a une aire égale ou supérieure à 2 pourcent d'une aire de la surface extérieure.

16. Composite selon la revendication 15,
dans lequel les positions des extrémités à large anneau formant la surface extérieure sont irrégulières, et la surface extérieure présente une minuscule irrégularité au niveau des atomes.

17. Composite selon la revendication 12,
dans lequel une surface intérieure de la fibre de carbone est formée des extrémités à petit anneau empilées dans la direction axiale, et
dans lequel les positions des extrémités à petit anneau formant la surface intérieure sont irrégulières, et la surface intérieure présente une minuscule irrégularité au niveau des atomes.
